# EUROPEAN PATENT APPLICATION

(11) **EP 1 273 598 A2**
(43) Date of publication of application: **08.01.2003**
(21) Application number: 02014731.0
(22) Date of filing: 03.07.2002
(51) Int. Cl.: C08F 232/00, C08L 45/00

(54) **Hydrocarbon resin with ethylidene group and rubber composition including the same**

(30) Priority: 06.07.2001 JP 2001205621
(71) Applicant: NIPPON PETROCHEMICALS CO., LTD., Tokyo (JP)
(72) Inventor: Tajima, Shuichi, Tokyo (JP); Kawai, Kazuo, Yokohama-shi, Kanagawa (JP)
(74) Representative: Brown, John David

(57) **Abstract**

To provide a hydrocarbon resin for improving rubber compositions, wherein the hydrocarbon resin has improved durability, abrasion resistance, stretch, and productivity, while retaining puncturing strength and tear strength of vulcanized rubber products such as tires and the like; and to also provide a rubber composition comprising the hydrocarbon resin, or vehicle tire obtained from the rubber composition,

Hydrocarbon resin having ethylidene group is obtained by copolymerization of raw materials including 40 to 95 parts by weight of a component A which is included of cyclopentadiene compounds and/or a Diels-Alder reaction addition product with a specific chemical structure, 5 to 60 parts by weight of a component B which includes compounds with specific structure equivalent to 1:1 Diels-Alder reaction of 5-ethylidenenorbornene-2 and/or 5-ethylidenemethylnorbornene-2, and cycolpentadiene and/or methylcyclopentadiene. If wished, 0 to 50 parts by weight of unsaturated aromatic hydrocarbon fraction obtained by pyrolysis of petroleum can be copolymerized. The hydrocarbon resin is thought to have a specific chemical structure having many highly reactive carbon-carbon unsaturated bonds on its side chains.

## Description

### BACKGROUND OF THE INVENTION

### Field of the Invention

This invention relates to a hydrocarbon resin having excellent crosslinking reactivity which is obtained from a specific raw material composition especially relates to a hydrocarbon resin, and a method of preparing the same, wherein the hydrocarbon resin has improved cut-resistance, chipping-resistance, abrasion resistance, stretch, productivity, while maintaining high puncturing strength and tear strength of the rubber composition upon blending with natural rubber and/or synthetic rubber. Additionally, this invention is related to a method of preparing raw material for the hydrocarbon resin. In addition, this invention relates to a rubber composition containing the hydrocarbon resin, and a vehicle tire obtained from the rubber composition.

### Detailed Description of the Prior Art

Large tires such as those for trucks and buses, and off-road tires for construction vehicles require high cut-resistance and chipping-resistance due to severe use environment. As a solution for these problems, blending of various hydrocarbon resins into natural rubber and synthetic rubber has been proposed. Some examples of methods to improve cut-resistance and chipping-resistance blend into natural rubber and synthetic rubber the following: dicyclopentadiene resin in Japanese Patent Publication No.Sho.48-38615, α -olefin-copolymerized dicyclopentadiene resin in Japanese Patent No.2517233, 5-alkylidene norbornene-2-copolymerized dicyclopentadiene resin in Japanese Patent Laid-open No. Hei. 3-7215, and ethylidene norbornene-added dicyclopentanediene resin in Japanes Patent No. 2779220.

### SUMMARY OF THE INVENTION

Improving the durability of rubber compositions extends product life cycle and leads to energy saving and resource conservation, which are a common problem for all fields of application. Particularly, the requirements for rubber compositions in fields such as tires, belts, hoses, cushioning material and sealant are high, desiring improvement not only in puncturing strength and tear strength, but also cut-resistance, chipping-resistance, and abrasion resistance. Especially, in conventional technology, blending of various hydrocarbon resin improved cut-resistance and chipping-resistance, but none had excellent abrasion resistance at the same time.

In addition, demands for improving not only the properties of rubber compositions, but also workability, productivity, safety during its preparation process are recently increasing, and these are also problems which are recognized as needing to be solved.

The inventors of this invention have after intensive studying to solve these problems found that a rubber composition can solve the above mentioned problems, thus leading to this invention, wherein the rubber composition includes 1 to 35 parts by weight of hydrocarbon resin prepared by copolymerization of 40 to 95 parts by weight of a component including specific cyclopentadiene compound or derivatives of the same, and 5 to 60 parts by weight of a component including specific 5-ethylidene norbornene-2 compounds or derivatives of the same, and additionally if occasion demands, a fraction including an unsaturated aromatic hydrocarbon, the fraction being obtained by pyrolysis of petroleum, are blended with 100 parts by weight of natural rubber and/or synthetic rubber.

In other words, the first claim of this invention relates to a method of preparing hydrocarbon resin having ethylidene group, and also related to a hydrocarbon resin having ethylidene group obtained by the method of preparation; wherein the hydrocarbon resin having ethylidene group is obtained by copolymerization of the following raw materials:
(1) 40 to 95 parts by weight of a component A comprising a compound represented by the following general formula (I): 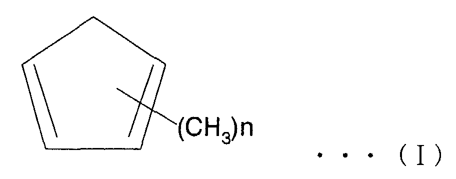 (where n is 0 or 1), and/or a Diels-Alder addition product from the compound;
(2) 5 to 60 parts by weight of a component B comprising a compound represented by the following formula (II) : 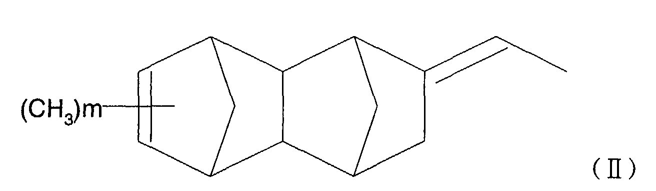 where m is any one of 0, 1 and 2, provided that the sum of the component A and the component B is 100 parts by weight; and
(3) 0 to 50 parts by weight of a component C comprising a fraction which contains an unsaturated aromatic hydrocarbon, the fraction being obtained by pyrolysis of petroleum, and has a boiling point in the range of 140 to 220°C.
   and, ethylidene group containing hydrocarbon resin obtained by the method of production.

This invention relates to a hydrocarbon resin having ethylidene group and a method of preparing the same, wherein the component B is a composition prepared by Diels-Alder reaction of:
at least one of the following compounds:
   (a) 5-ethylidene norbornene-2, and
   (b) 5-ethylidene methylnorbornene-2; and
at least one of the following compounds:
   (c) cyclopentadiene, and
   (d) methylcyclopentadiene.

This invention relates to the hydrocarbon resin and a method of preparing the same, wherein the component B is a composition which is obtained by removing unreacted moieties of the compounds (a), (b), (c) and (d) from a product which is prepared by Diels-Alder reaction of:
at least one of the following compounds:
   (a) 5-ethylidene norbornene-2, and
   (b) 5-ethylidene methylnorbornene-2; and
at least one of the following compounds:
   (c) cyclopentadiene, and
   (d) methylcyclopentadiene
until the sum of the unreacted moieties of the compounds (a), (b), (c) and (d) are decreased to 3% by weight or less in the component B.

This invention is a rubber composition, wherein 1 to 35 parts by weight of hydrocarbon resin having ethylidene group is blended with 100 parts by weight of natural rubber and/or synthetic rubber.

This invention is a rubber composition, wherein 1 to 35 parts by weight of hydrocarbon resin having ethylidene group is blended with 100 parts by weight of diene rubber.

This invention is a vehicle tire, wherein a rubber composition which at least the tread portion of the tire comprises of a rubber composition according to this invention.

This invention is a hydrocarbon resin having ethylidene group, which has structure represented by the following formula (III): 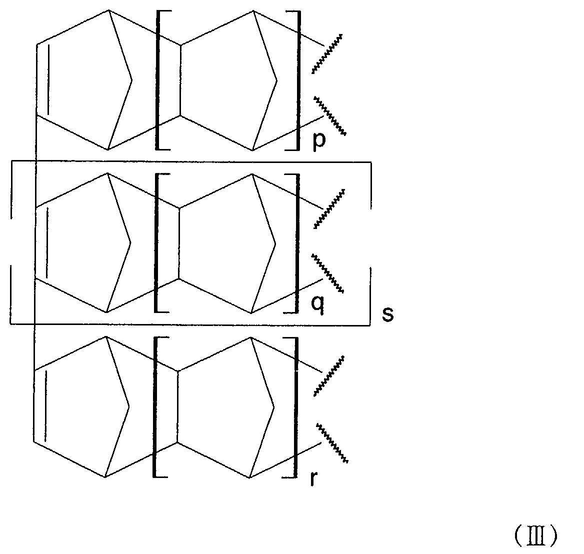 (where p, q, r, s are integers from 0 to 20, and the structure of each end are each independently selected from structure represented by the following formula (IV) and (V), and in cases where the component C is added, formula (VI)): 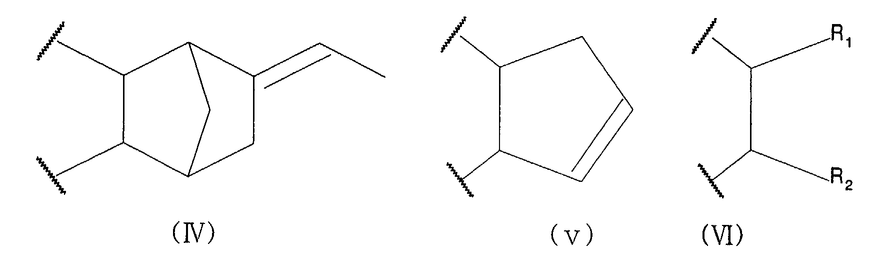 (where R₁, R₂ are Diels-Alder reaction residues originating from the component C, and are selected from the group comprising of hydrogen, aromatic group with no substitution or substitution with an alkyl group, alkyl group with a straight chain or a branched chain, or R₁ and R₂ may form a ring).

This invention is related to the hydrocarbon resin having ethylidene group, which has structure represented by formula (III), wherein softening point is in the range of 80 to 180°C.

This invention relates to a method of preparing hydrocarbon resin having ethylidene group having structure represented by formula (III), which is characterized by copolymerization of the following raw materials:
(1) 40 to 95 parts by weight of a component A comprising a compound represented by the following general formula (I): 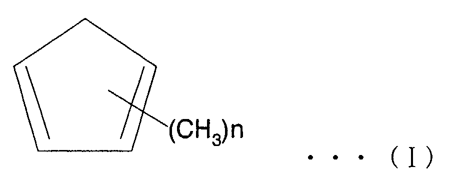 (where n is 0 or 1), and/or a Diels-Alder addition product from the compound;
(2) 5 to 60 parts by weight of a component B comprising a compound represented by the following formula (II) : 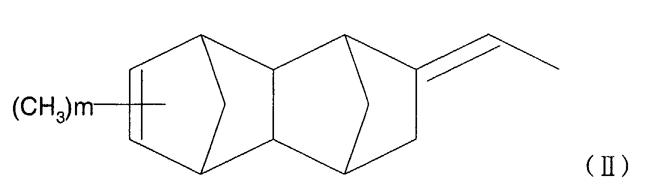 (where m is any one of 0, 1 and 2), (provided that the sum of the component A and the component B is 100 parts by weight); and
(3) 0 to 50 parts by weight of a component C comprising a fraction containing an unsaturated aromatic hydrocarbon, the fraction being obtained by pyrolysis of petroleum, and has a boiling point in the range of 140 to 220°C.

This invention relates to a method of preparing hydrocarbon resin having ethylidene group having structure represented by formula (III), wherein the component B is a composition prepared by Diels-Alder reaction of:
at least one of the following compounds:
   (a) 5-ethylidene norbornene-2, and
   (b) 5-ethylidene methylnorbornene-2; and
at least one of the following compounds:
   (c) cyclopentadiene, and
   (d) methylcyclopentadiene

This invention relates to a method of preparing hydrocarbon resin having ethylidene group having structure represented by formula (III), wherein the component B is a composition which is obtained by removing unreacted moieties of the compounds (a), (b), (c) and (d) from a product which is prepared by Diels-Alder reaction of:
at least one of the following compounds:
   (a) 5-ethylidene norbornene-2, and
   (b) 5-ethylidene methylnorbornene-2; and
at least one of the following compounds:
   (c) cyclopentadiene, and
   (d) methylcyclopentadiene
until the sum of the unreacted moieties of the compounds (a), (b), (c) and (d) are decreased to 3% by weight or less in the component B.

This invention is related to a rubber composition, wherein 1 to 35 parts by weight of the hydrocarbon resin having ethylidene group having structure represented by formula (III) is blended with 100 parts by weight of at least one rubber selected from natural rubber and synthetic rubber.

This invention is related to a vehicle tire with rubber composition, wherein rubber composition which at least part of the tread portion of the tire comprises of 1 to 35 parts by weight of the hydrocarbon resin having ethylidene group having structure represented by formula (III), blended with 100 parts by weight of at least one rubber selected from natural rubber and synthetic rubber.

### DETAILED DESCRIPTION OF THE PREFERRED EMBODIMENT

This invention is described in detail below.

Examples of compounds represented by the following general formula (I) are cyclopentadiene and methylcyclodiene. Examples of Diels-Alder reaction additive of the compound are dicyclopentadiene, methyldicyclopentadiene, dimethyldicyclopentadiene, tricyclopentadiene, methyltricyclopentadiene, and the like. 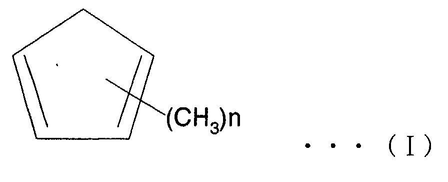 (where n is 0 or 1.)

The component A in this invention is comprised of at least one or more of the above component (compound represented by formula (I)) or the Diels-Alder reaction product of any of these. To prepare the component A, compounds belonging to the compound represented by formula (I) may be separately obtained and accordingly blended, or by-product oil upon high-temperature pyrolysis of naptha and the like, such as the C₅ fraction or the C₁₀ fraction, and compounds refined by distillation and the like of the fractions may be used.

Examples of compounds represented by general formula (II) are
2-ethylidene-(1,2,3,4,4a,5,8,8a-octahydro-1,4,5,8-dimetha no) naphthalene, and monomethyl substitution product and dimethyl substitution product of the compounds, and the like. 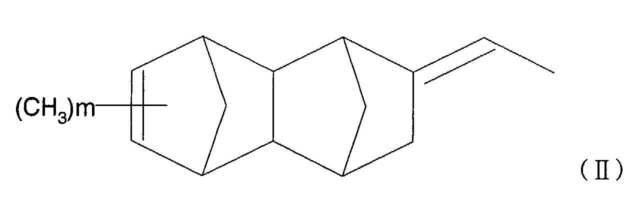 (where m is any one of 0, 1 and 2.)

In addition, examples of methods of preparing 2-ethylidene-(1,2,3,4,4a,5,8,8a-octahydro-1,4,5,8-dimetha no) naphthalene are described in Japanese Patent Laid-open No.Sho.47-31970 and 47-31971.

The component B of this invention is comprised of one or more of the above components. To prepare the component B, each compound belonging to formula (II) may by obtained separately and appropriately blended, but in this invention, as a more convenient and preferable method, the inventors found a method of using the reaction products from the Diels-Alder reaction between (a) 5-ethylidene norbornene-2 and/or (b) 5-ethylidene methylnorbornene-2, and (c) cyclopentadiene and/or (d) methylcyclopentadiene.

The above Diels-Alder reaction between (a) 5-ethylidene norbornene-2 and/or (b) 5-ethylidene methylnorbornene-2, and (c) cyclopentadiene and/or (d) methylcyclopentadiene is done at mole ratio of 1:0.01 to 1:100, preferably at a mole ratio of 1:0.05 to 1:2.

No catalysts are necessary for the Diels-Alder reaction, however, Friedel-Crafts catalysts such as BF₃ and ether complex of the catalyst may be used. Reaction solvents may be added, for example, alcohol such as ethanol, hydrocarbons such as toluene and hexane, provided that the reaction solvents do not inhibit the reaction. The reaction temperature is 50 to 250°, preferably 80 to 200°C. The reaction time depends on the reaction solvents and reaction temperature, and the like, in the range of 5 minutes to 10 hours, preferably 10 minutes to 5 hours. In doing so, it is not preferable to allow the reaction to progress excessively because the yield of the compound (the addition reaction product of one molecule of compound (a) or (b), and one molecule of compound (c) or (d)) represented by formula (II), which is the main component of the component B decreases.

The above reaction products may be refined by distillation. In addition, sufficient removal of unreacted (a) 5-ethylidene norbornene-2 and/or (b) 5-ethylidene methylnorbornene-2 by distillation and the like from the crude product of reaction, preferably so the unreacted moeties of the reaction product are decreased to 3% by weight or less in the component B. It is possible to use the composition itself for copolymerization with the component A, and as occasion demands, may additionally be copolymerized with the component C.

In addition, the component B is preferably the crude product after reaction between (a) 5-ethylidene norbornene-2 and/or (b) 5-ethylidene methylnorbornene-2, and (c) cyclopentadiene and/or (d) methylcyclopentadiene, wherein residual (a) 5-ethylidene norbornene-2 and/or (b) 5-ethylidene methylnorbornene-2 is reacted to 3% by weight or less. However, excessive reaction of compounds (a), (b), and compounds (c), (d) produces high-molecular weight compounds which increase the viscosity of the reaction solution, and precipitation of unsoluble compounds may prevent fluidity or mixing property of the reaction solution and reduce workability, or reduce the concentration of the compound represented by formula (II), and impair the improved durability effect, improved abrasion resistance effect, or tear strength of the rubber product obtained from rubber composition made by blending hydrocarbon resin obtained by using this reaction product as the component B. Preferably, the component B is transparent, and the softening point is 50°C or lower.

The production of hydrocarbon resin having ethylidene group in this invention is done by reacting components at a ratio of 40 to 95 parts by weight of the component A and 5 to 60 parts by weight of the component B, provided that the sum of the component A and the component B is 100 parts by weight. No improvement in effect is seen for durability (cut-resistance, chipping-resistance, and the like), abrasion resistance, or tear strength of the rubber product obtained from the rubber composition prepared by blending hydrocarbon resin obtained by using less than 5 parts by weight of the component B. In addition, more than 60 parts by weight of the component B decreases the molecular weight of the hydrocarbon resin, distillation and recovering the low molecular weight component may reduce the yield of resin, and also reduce the physical properties of rubber products obtained from rubber composition made by blending the resin.

In addition, upon copolymerization of the component A and the component B, other than the component A and the component B, the fraction (for example C₉ fraction) obtained by pyrolysis of petroleum which contains unsaturated aromatic hydrocarbons with boiling point in the range of 140 to 220°C may be considered as the component C, and up to 50 parts by weight of the component C may be added and copolymerized with 100 parts by weight of the component A and the component B totaled together. Examples of unsaturated aromatic hydrocarbons are styrene, vinyltoluene, indene, methylindene, and the like. The following may be added to the component C: styrenes such as styrene, α -methylstyrene, tert-butylstyrene, vinyltoluene; indenes such as indene, methylindene; α -olefins with C₆ to C₁₂ (preferably 1-octene); terpenes such as α -pinene, β -pinene, limonene, dipentene, β -phellandrene, myrcene, 3-carene, camphene, turpyrene, and the like. In addition, the compound C may be substituted by one or more of these compounds. Upon production of the hydrocarbon resin of this invention, other unsaturated compounds, for example unsaturated carbonic acids such as maleic anhydride, acrylic acid, methyl acrylate, and the like; unsaturated alcohols such as aryl alcohols and the like, may be added.

Upon copolymerization reaction, for example Friedel-Crafts catalysts such as BF₃ and the ether complex of the catalyst may be used, but no use of catalysts is preferable. Reaction solvents which do not inhibit the reaction, for example alcohols such as ethanol, or hydrocarbons such as toluene and hexane, may be used. Taking into consideration the solubility of the produced hydrocarbon resin, aromatic hydrocarbon solvents are preferable. The reaction temperature is 150 to 300°C, preferably 200 to 280°C. The reaction time is 10 minutes to 20 hours, preferably 30 minutes to 10 hours. It is possible to remove the low weight fraction from the reaction product by distillation and the like.

The softening point of hydrocarbon resin having ethylidene group of this invention measured by ring and ball method (JISK5601-2-2) is in the range of 80 to 180°C, preferably in the range of 100 to 160°C. If softening point is below 80°C, the modulus of rubber composition under low extension conditions decrease, and cut-resistance, chipping-resistance is reduced. On the other hand, in cases over 180°C, uniform dispersion in the rubber composition is difficult.

The hydrocarbon resin having ethylidene group related to this invention, requires the component B, in other words, the compound represented in formula (II), or a composition including this component as its main component, as an essential raw material, and the component is obtained by copolymerization of the component A and the component B. The copolymerization reaction of the component A and the component B is a combination of Diels-Alder reaction and ene reaction. The main structure of the produced polymer is represented by the following general formula (III). 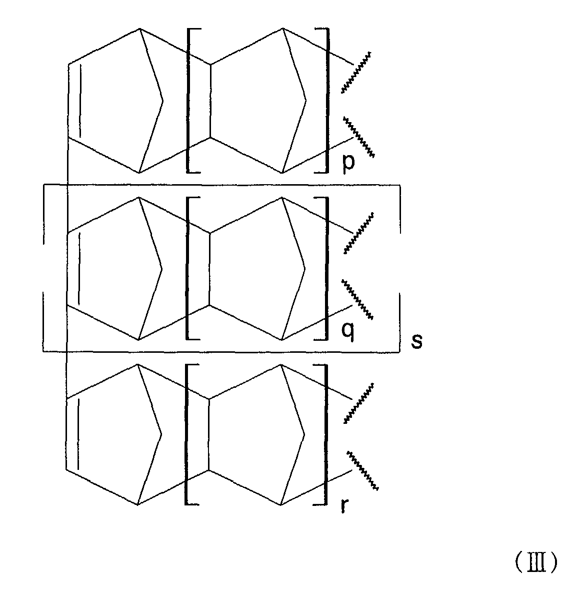 (where p, q, r, s are integers from 0 to 20, and the structure of each end are each independently selected from structure represented by the following formula (IV) and (V), and in cases where the component C is added, formula (VI)) : 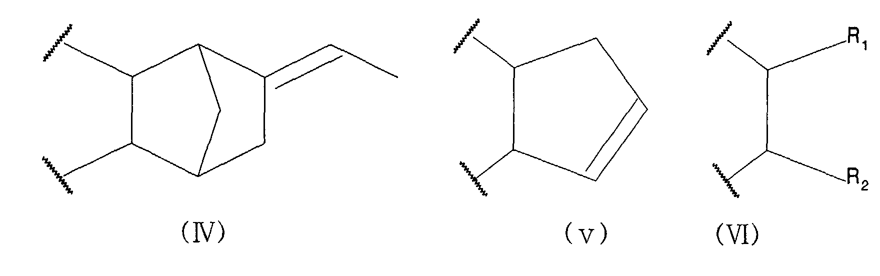 (where R₁, R₂ are Diels-Alder reaction residues originating from the component C, and are selected from the group comprising of hydrogen, aromatic group with no substitution or substitution with an alkyl group, alkyl group with a straight chain or a branched chain, or R₁ and R₂ may form a ring).

The copolymerization of hydrocarbon resin having ethylidene group in this invention may progress not only in the s direction (this direction means a main chain direction.) of the above formula (III), but also p, q. r directions, (these directions mean side chain directions.),
and as a result, may have 3 or more cross-linkable structures in one molecule. It is thought that due to the characteristics of these structures, the rubber composition blended with the hydrocarbon resin has increased crosslink density, and improvements are seen in cut-resistance, chipping-resistance, and abrasion resistance.

In addition, the chemical structure of hydrocarbon resin having ethylidene group related to this invention is affected by reaction conditions, copolymerization ratio of the component A and the component B, presence or absence of alkyl substitution product in each unsaturated compound within the component A and the component B, and alkyl groups, and if the component C is used, the used amount of the component C, and the like, Thus, not only the above formula (III) restricts the structure of hydrocarbon resin having ethylidene group related to this invention.

The above described structure of hydrocarbon resin having ethylidene group of this invention is supported by the molecular weight distribution value obtained from gel permeation chromatography (GPC), carbon-carbon unsaturated bond content per unit weight confirmed by iodine index, and proton nuclear magnetic resonance (¹H-NMR) spectra integral peak ratio.

The hydrocarbon resin having ethylidene group of this invention is different from the hydrocarbon resins disclosed in Japanese Patent Publication No.Hei.3-7215 and Japanese Patent No.2779220. The hydrocarbon resin described in Japanese Patent Publication No.Hei.3-7215 is obtained by a copolymerization of 5-alkylidenenorboenene-2 or its derivatives with cyclopentandiene compounds. The hydrocarbon resin described in Japanese Patent No.2779220 is addition of ethylidene norbornene to the termini of dicyclopentandiene hydrocarbon resins. The hydrocarbon resin of this invention and the hydrocarbon resins of these inventions differ not only in the polymerized raw material, but also in the arrangement of structural units derived from 5-ethylidene norbornene-2 in the molecular structure of the hydrocarbon resin. In other words, the hydrocarbon resin of this invention has structure having many carbon-carbon unsaturated bonds with high reactivity located at the side chain part of the polymer, and the structure attains advantageous effects (abrasion resistance, crosslinking reaction, cut-resistance, chipping-resistance and the like) of this invention.

The major reasons for producing the characteristic structure of the hydrocarbon resin of this invention is the use of component B, wherein the main component is the compound represented by formula (II). As described before, the compound represented by formula (II) is prepared by Diels-Alder reaction of at least one of (a) 5-ethylidene norbornene-2 and (b) 5-ethylidene methylnorbornene-2, with at least one of (c) cyclopentadiene and (d) methylcyclpentadiene. Any of the following may be used as the component B: isolation of the compound represented by formula (II) from the reaction product, compounds with unreacted moieties removed accordingly from the reaction product, or the reaction product itself. Considering the excellent effects achieved when the hydrocarbon resin is blended into rubber, and from the industrial point of view in production, while keeping the characteristics of the chemical structure of the obtained hydrocarbon resin, it is especially preferably if the component B is the composition obtained by removing unreacted moieties in the reaction product is decreased to 3% by weight or less.

In addition, the compounds of formula (c), (d) may be directly added to the reaction system for producing component B; however these compounds may cause problems with storage and the like before reaction. Dicyclopentadiene, which is known for its high safeness, or derivatives of dicyclopentadiene may be added to the reaction system, and depolymerization of the compound will produce the compounds represented by formula (c), (d) within the reaction system, and can be reacted with compounds represented by formula (a), (b). In the same way, upon copolymerization of the component A and the component B, use of dicyclopentadiene and its derivatives as the component A, production of the compound represented by formula (I) using depolymerization, and copolymerization of this with the component B is preferable. In this way, the hydrocarbon resin having ethylidene group of this invention may be obtained by a method of preparation with high safety and this can be considered as to be one of the advantageous effects of this invention.

Rubber used in the rubber composition of this invention is not restricted as long as it is a rubber having carbon-carbon unsaturated bonds, but natural rubber or synthetic rubber, and among synthetic rubber, diene rubbers such as styrene-butadiene rubber and butadiene rubbers, are preferable. These may be used alone or in admixture. In addition, when used as a rubber composition, the following may be added as occasion demands: vulcanizing agents starting with sulfur, vulcanizing accelerators, compounding agents such as silane coupling agents, antioxidants, and the like; and fillers such as carbon black and silica and the like.

It is preferable to blend 1 to 35 parts by weight of hydrocarbon resin having ethylidene group of this invention to 100 parts by weight of rubber. Less than 1 part by weight does not show sufficient improvement in results for puncturing test and tensile test, whereas more than 35 parts by weight worsens abrasion resistance and rubber elasticity properties.

The improvements due to this invention are confirmed respectively as follows: improvements in cured rubber properties are proved by tensile tests and tear strength tests, fixed load Williams abrasion tests and Akron abrasion tests especially confirm improvements concerning abrasion resistance, improvements in productivity, such as curing time, viscosity and the like, are confirmed by Mooney viscosity and scorch time.

Because performance of the tire, such as cut-resistance and chipping-resistance, is dependent on how much the tire tread portion absorbs the energy produced upon impaction of the tire with other objects, cut-resistance and chipping-resistance can be evaluated by tensile test corresponding to elastic energy properties of the rubber composition.

### [EMBODIMENTS]

Below are embodiments to further illustrate this invention.

### [EMBODIMENT 1]

After completely blending 1883 g of dicyclopentadiene (DCPD), 290 g of C₉ fraction (fraction containing vinyltoluene and indene obtained by pyrolysis of petroleum with boiling point in the range of 140 to 220°C), 878 g of Nisseki Hisol 100 (aromatic hydrocarbon solvent produced by Nippon Petrochemicals Co., Ltd.), and 149 g of 2-ethylidene-(1,2,3,4,4a,5,8,8a-octahydro-1,4,5,8-dimethan o)naphthalene (EDMON), the mixture was put in a 5 L stainless steel autoclave. The temperature was slowly raised to 260°C while stirring, and reaction was done at 260°C for 4 hours. After cooling, the reaction solution was transferred to a glass flask with a condenser, and the solvent and unreacted monomers were removed by distillation under depressurization at 6 mmHg (7.98hPa), 220°C for 30 minutes. Resin with a softening point at 151°C was obtained.

### [COMPARATIVE EXAMPLE1]

After completely blending 1883 g of DCPD, 290 g of C₉ fraction (same as that used in EMBODIMENT 1) 889 g of Nisseki Hisol 100, 138g of 5-ethylidenenorbornene-2 (ENB), the mixture was put in a 5 L stainless steel autoclave. The temperature was slowly raised to 260°C while stirring, and reaction was done at 260°C for 4 hours. After cooling, the reaction solution was transferred to a glass flask with a condenser, and the solvent and unreacted monomers were removed by distillation under depressurization at 6 mmHg (7.98hPa), 220°C for 30 minutes. Resin with a softening point at 147°C was obtained.

Comparison of property values of hydrocarbon resin obtained in EMBODIMENT 1 and COMPARATIVE EXAMPLE 1 are shown in Table 1.

**Table 1**

| Hydrocarbon resin | EMBODIMENT 1 | COMPARATIVE EXAMPLE 1 |
|---|---|---|
| ENB content (wt%) (In polymerization component) | 4.5 (ENB conversion) | 6.5 |
| Softening point (°C) | 151 | 147 |
| Iodine value (g/100g) | 144 | 138 |
| GPC | | |
| Mw | 788 | 1036 |
| Mn | 426 | 431 |
| ¹H-NMR | | |
| Alkene peak area percentage (%) | 8.6 | 7.9 |

In the table, ENB represents 5-ethylidenenorbornene-2. ENB conversion is done by multiplying 120/186 to the EDMON content (molecular weight of ENB is 120, molecular weight of EDMON is 186). Mw is average molecular weight by weight, Mn is number average molecular weight (converted to polystyrene). Alkene measured by ¹H-NMR used peaks from alkene protons and the range was 6.5ppm to 4.8ppm.

According to Table 1, although the hydrocarbon resin obtained in embodiment 1 and the hydrocarbon resin obtained in comparative example 1 have about the same softening point, the iodine value of the hydrocarbon resin in embodiment 1 was higher. In addition, although both have about the same Mn, the Mw is low, showing that the molecular weight distribution is smaller. ¹H-NMR shows that the hydrocarbon resin of embodiment 1 has more unsaturated bonds, and it is confirmed that especially the peak area in the range of 5.8 ppm to 5.1 ppm due to cyclopentene ring and ethylidene group protons is larger. From these results, it has been confirmed that the hydrocarbon resin of embodiment 1 in this invention is clearly different from the hydrocarbon resin of comparative example 1.

The rubber composition blended with hydrocarbon resin obtained from embodiment 1 or comparative example 1 was obtained and subjected to tests respectively. The compounding ratio of the rubber composition was rubber: SBR1502 (produced by ZEON Corporation) 100phr, hydrocarbon resin: 10.0phr, filler: ISAF Carbon Black (produced by Tokai Carbon Co., Ltd) 50.0phr, lubricant: stearic acid (produced by NOF Corporation) 3.0phr, antioxidant: Santoflex 6PPD(*) (produced by Flexsys K.K.) 1.0phr, activator: Zinc oxide (produced by Seido Chemical Industry Co., Ltd.) 4.5phr, vulcanizing accelerator: Nocceler MSA(**) (produced by Ouchisinko Chemical Industrial Co., Ltd.) 0.6phr, vulcanizing agent: sulfur (produced by Hosoi Chemical Industry Co., Ltd.) 2.0phr. Vulcanizing conditions were 160°C, 30 minutes. Results are shown in Table 2. (Results are shown on a scale of 100 representing the value in rubber test 2)

**Table 2**

| | Rubber test 1 | Rubber test 2 |
|---|---|---|
| Hydrocarbon resin | EMBODIMENT 1 | COMPARATIVE EXAMPLE 1 |
| Mooney viscosity | 90 | 100 |
| Scorch time T_{0.9-0.1} | 97 | 100 |
| Stretch | 107 | 100 |
| Tensile strength | 91 | 100 |
| 300 modulus | 82 | 100 |
| Tear strength | 98 | 100 |
| Fixed load Williams abrasion test Abrasion amount | 77 | 100 |
| Akron abrasion test Abrasion volume | 89 | 100 |

* : N-(1,3-Dimethylbutyl)-N'-phenyl-P-phenylenediamide
**: N-Oxydiethylene-2-benzothiazolylsulfenamide

The productivity of the rubber composition using the hydrocarbon resin obtained by embodiment 1 is improved compared to that of comparative example 1, having lower Mooney viscosity, shorter scorch time, and shorter curing time. As a vulcanized rubber composition, retaining tear strength about the same as conventional techniques, higher stretchability and very high abrasion resistance was provided. In addition, from the tensile test results, cutting resistance, chipping resistance when made into tires is excellent.

The hydrocarbon resin in this invention and rubber composition blended with natural rubber and/or synthetic rubber has a high degree of durability and abrasion resistance compared to rubber composition with hydrocarbon resin made by conventional techniques.

## Claims

1. A hydrocarbon resin having ethylidene group, wherein said resin is obtained by the copolymerization of a raw material which comprises:
(1) 40 to 95 parts by weight of a component A comprising a compound represented by the following formula (I): 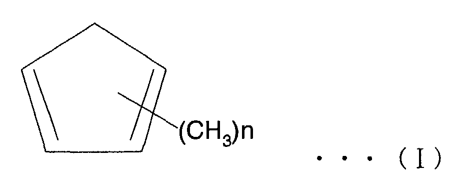 (where n is 0 or 1), and/or a Diels-Alder addition product from said compound;
(2) 5 to 60 parts by weight of a component B comprising a compound represented by the following formula (II) : 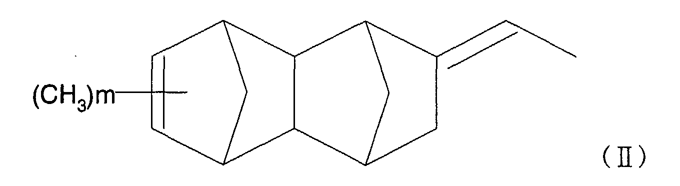 (where m is any one of 0, 1 and 2), (provided that the sum of said component A and said component B is 100 parts by weight); and
(3) 0 to 50 parts by weight of a component C comprising a fraction including an unsaturated aromatic hydrocarbon, said fraction being obtained by pyrolysis of petroleum, and has a boiling point in the range of 140 to 220°C.

2. A hydrocarbon resin having ethylidene group according to claim 1, wherein said component B is a composition which is prepared by Diels-Alder reaction of:
at least one of the following compounds:
(a) 5-ethylidene norbornene-2, and
(b) 5-ethylidene methylnorbornene-2; and
at least one of the following compounds:
(c) cyclopentadiene, and
(d) methylcyclopentadiene.

3. A hydrocarbon resin having ethylidene group according to claim 1, wherein said component B is a composition which is obtained by removing unreacted moieties of said compounds (a), (b), (c) and (d) from a product which is prepared by Diels-Alder reaction of:
at least one of the following compounds:
(a) 5-ethylidene norbornene-2, and
(b) 5-ethylidene methylnorbornene-2; and
at least one of the following compounds:
(c) cyclopentadiene, and
(d) methylcyclopentadiene
until the sum of said unreacted moieties of said compounds (a), (b), (c) and (d) are decreased to 3% by weight or less in said component B.

4. A rubber composition, wherein 1 to 35 parts by weight of a hydrocarbon resin having ethylidene group according to any one of claims 1 to 3 are blended with 100 parts by weight of natural rubber and/or synthetic rubber.

5. A rubber composition, wherein 1 to 35 parts by weight of a hydrocarbon resin having ethylidene group according to any one of claims 1 to 3 are blended with 100 parts by weight of diene rubber.

6. A vehicle tire, wherein a rubber composition which at least a tread portion of said tire comprises is a rubber composition according to claim 4 or 5.

7. A method of preparing a hydrocarbon resin having ethylidene group, wherein a raw material is copolymerized, said raw material including:
(1) 40 to 95 parts by weight of a component A comprising a compound represented by the following formula (I) : 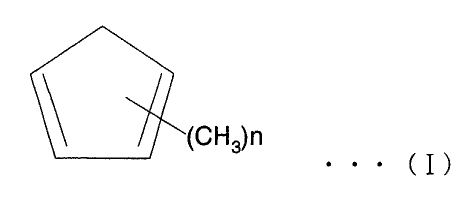 (where n is 0 or 1), and/or a Diels-Alder addition product from said compound;
(2) 5 to 60 parts by weight of a component B comprising a compound represented by the following formula (II) : 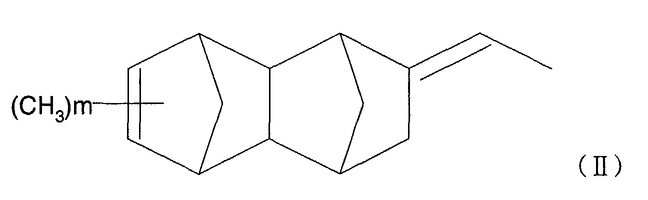 (where m is any one of 0, 1 and 2), (provided that the sum of said component A and said component B is 100 parts by mass); and
(3) 0 to 50 parts by weight of a component C comprising a fraction including an unsaturated aromatic hydrocarbon, said fraction being obtained by pyrolysis of petroleum, and has a boiling point in the range of 140 to 220°C.

8. A method of preparing a hydrocarbon resin according to claim 7, wherein said component B is a composition which is prepared by Diels-Alder reaction of:
at least one of the following compounds:
(a) 5-ethylidene norbornene-2, and
(b) 5-ethylidene methylnorbornene-2; and
at least one of the following compounds:
(c) cyclopentadiene, and
(d) methylcyclopentadiene.

9. A method of preparing a hydrocarbon resin according to claim 7, wherein said component B is a composition which is obtained by removing unreacted moieties of said compounds (a), (b), (c) and (d) from a product which is prepared by Diels-Alder reaction of:
at least one of the following compounds:
(a) 5-ethylidene norbornene-2, and
(b) 5-ethylidene methylnorbornene-2; and
at least one of the following compounds:
(c) cyclopentadiene, and
(d) methylcyclopentadiene
until the sum of said unreacted moieties of said compounds (a), (b), (c) and (d) are decreased to 3% by weight or less in said component B.

10. Hydrocarbon resin having ethylidene group, which has a structure represented by the following formula (III): 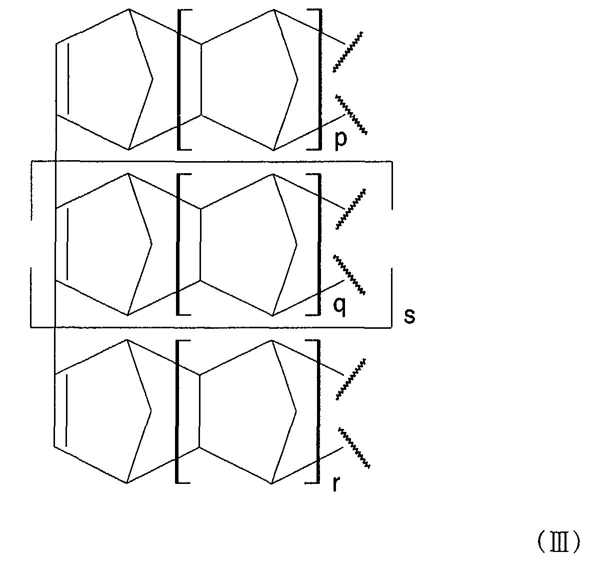 (where p, q, r, s are integers from 0 to 20, and the structure of each end are each independently selected from structure represented by the following formula (IV) and (V), and in cases where said component C is added, formula (VI)) : 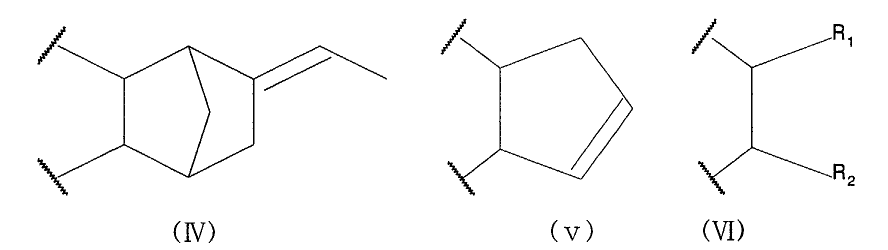 (where R₁, R₂ are Diels-Alder reaction residues originating from said component C, and are selected from the group comprising of hydrogen, aromatic group with no substitution or substitution with an alkyl group, alkyl group with a straight chain or a branched chain, or R₁ and R₂ may form a ring.)

11. Hydrocarbon resin according to claim 10, wherein said hydrocarbon resin having ethylidene group has a softening point in the range of 80 to 180°C.

12. Rubber composition, wherein 1 to 35 parts by weight of a hydrocarbon resin having ethylidene group according to claim 10 or 11 are blended with 100 parts by weight of at least one rubber selected from natural rubber and synthetic rubber.

13. Vehicle tire, wherein a rubber composition which at least a tread portion of said tire comprises is a rubber composition according to claim 12.

14. A method of producting a hydrocarbon resin having ethylidene group according to claim 10, wherein raw material is copolymerized, said raw material including:
(1) 40 to 95 parts by weight of a component A comprising a compound represented by the following formula (I) : 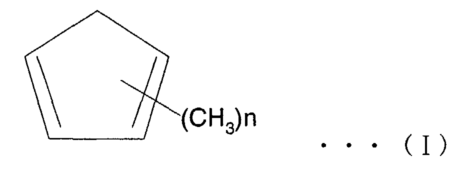 (where n is 0 or 1), and/or a Diels-Alder addition product from said compound;
(2) 5 to 60 parts by weight of a component B comprising a compound represented by the following formula (II) : 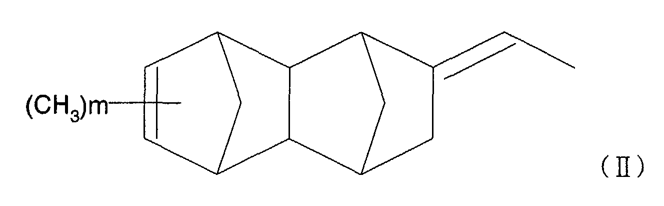 (where m is any one of 0, 1 and 2), (provided that the sum of said component A and said component B is 100 parts by weight); and
(3) 0 to 50 parts by weight of a component C comprising a fraction including an unsaturated aromatic hydrocarbon, said fraction being obtained by pyrolysis of petroleum, and has a boiling point in the range of 140 to 220°C.

15. A method according to claim 14, wherein said component B is a composition which is prepared by Diels-Alder reaction of:
at least one of the following compounds:
(a) 5-ethylidene norbornene-2, and
(b) 5-ethylidene methylnorbornene-2; and
at least one of the following compounds:
(c) cyclopentadiene, and
(d) methylcyclopentadiene.

16. A method according to claim 14, wherein said component B is a composition which is obtained by removing unreacted moieties of said compounds (a), (b), (c) and (d) from a product which is prepared by Diels-Alder reaction of:
at least one of the following compounds:
(a) 5-ethylidene norbornene-2, and
(b) 5-ethylidene methylnorbornene-2; and
at least one of the following compounds:
(c) cyclopentadiene, and
(d) methylcyclopentadiene
until the sum of said unreacted moieties of said compounds (a), (b), (c) and (d) are decreased to 3% by weight or less in said component B.
